(19) **Europäisches Patentamt / European Patent Office / Office européen des brevets**

(11) **EP 4 025 468 B1**

(12) **FASCICULE DE BREVET EUROPEEN**

(45) Date de publication et mention
de la délivrance du brevet:
**06.11.2024 Bulletin 2024/45**

(21) Numéro de dépôt: **20764400.6**

(22) Date de dépôt: **03.09.2020**

(51) Classification Internationale des Brevets (IPC):
**B60W 30/02** *(2012.01)*    **B60W 60/00** *(2020.01)*
**B60W 40/10** *(2012.01)*    **B60W 50/00** *(2006.01)*
**B60W 30/18** *(2012.01)*    **B60W 10/184** *(2012.01)*
**B60W 10/20** *(2006.01)*    **B60W 40/114** *(2012.01)*
**B60W 30/12** *(2020.01)*

(52) Classification Coopérative des Brevets (CPC):
**B60W 30/02; B60W 10/184; B60W 10/20;
B60W 30/12; B60W 30/18145; B60W 40/114;
B60W 50/0097; B60W 60/0016;** B60W 2050/0031;
B60W 2420/403; B60W 2510/20; B60W 2520/14

(86) Numéro de dépôt international:
**PCT/EP2020/074644**

(87) Numéro de publication internationale:
**WO 2021/043925 (11.03.2021 Gazette 2021/10)**

(54) **DISPOSITIF DE COMMANDE PRÉDICTIF DU MOUVEMENT D'UN VÉHICULE AUTOMOBILE**

VORRICHTUNG ZUR PRÄDIKTIVEN STEUERUNG DER BEWEGUNG EINES KRAFTFAHRZEUGS

DEVICE FOR PREDICTIVELY CONTROLLING THE MOVEMENT OF A MOTOR VEHICLE

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **03.09.2019 FR 1909681**

(43) Date de publication de la demande:
**13.07.2022 Bulletin 2022/28**

(73) Titulaire: **Ampere SAS
92100 Boulogne-Billancourt (FR)**

(72) Inventeurs:
• **GONZALEZ BAUTISTA, David
78210 Saint Cyr l'école (FR)**

• **MILANES, Vicente
92100 Boulogne-Billancourt (FR)**

(74) Mandataire: **Renault Group
Renault s.a.s.
1 avenue du Golf
FR TCR AVA 055
78084 Guyancourt Cedex (FR)**

(56) Documents cités:
DE-A1- 102017 205 508    DE-A1- 102017 205 508
US-A1- 2018 088 582    US-A1- 2018 088 582

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

# Description

La présente invention concerne un dispositif de commande du mouvement d'un véhicule automobile.

Elle s'applique au domaine de la conduite automatisée de véhicule, qui implique notamment des fonctions de maintien du véhicule dans sa voie de circulation, de régulation de la vitesse, de direction du véhicule.

La conduite automatisée de véhicule a notamment pour objectifs d'améliorer la sécurité et l'efficacité des déplacements. Elle repose en particulier sur des systèmes de sécurité active, intégrant des systèmes d'aide à la conduite adaptés pour modifier le comportement dynamique du véhicule en situation critique tels que l'ESP (Electronic Stability Program), qui remplit une fonction de contrôle et stabilité de la trajectoire d'un véhicule automobile, notamment via des actions de freinage. Par exemple, lorsqu'un véhicule automobile s'engage dans un virage à une vitesse longitudinale trop élevée, il peut être difficile de respecter la courbure de la route et le véhicule automobile peut commencer à sous-virer. Le système ESP intervient alors automatiquement pour maintenir le véhicule sur la trajectoire désirée par le conducteur. De manière générale, si le véhicule s'écarte d'une trajectoire souhaitée par le conducteur, le système ESP va envoyer des signaux de consigne de couple moteur et/ou de couple de freinage afin de corriger la trajectoire du véhicule.

La conduite automatisée repose également sur la mise en oeuvre de systèmes de sécurité préventive, qui cherchent à anticiper des situations dangereuses en effectuant une action préventive. S'agissant de l'assistance au contrôle latéral, on peut citer comme exemple les systèmes d'assistance au contrôle latéral pour le maintien dans la voie LKA (Lane Keeping Assist), capables de contrôler à la fois les commandes de direction et de freinage.

Ces systèmes procurent de bonnes performances pour assurer la stabilité de la trajectoire du véhicule lorsque le conducteur effectue de mauvaises manoeuvres, comme par exemple la demande de vitesses supérieures à un seuil autorisé dans les virages ou de changements de direction rapides.

Cependant, les systèmes d'aide à la conduite tels que l'ESP voient leur performance se dégrader lorsqu'ils sont implémentés sur des véhicules à conduite complètement automatisée puisqu'on ne sort alors pas de la région linéaire de fonctionnement du système. Un cas typique est celui d'un véhicule en mode de conduite complètement automatisée qui s'approche d'un virage serré sans information de vitesse maximale, le système de maintien de voie va détecter les limites de voie, donc le véhicule poursuit sa trajectoire en mode autonome. Cependant, sans information sur la vitesse, le véhicule peut alors rouler beaucoup plus vite que la vitesse maximale pour effectuer ce virage, car il est trop tard pour que le système ESP puisse remettre le véhicule en place d'une manière stable.

Le document KR100851120 décrit un système de suivi de voie pour un véhicule automobile. Ce système repose sur un algorithme de contrôle de direction pour commander le véhicule par une combinaison de commandes de direction et de freinage. Il comprend un ensemble de capteurs embarqués, permettant de mesurer l'angle de braquage, la vitesse de lacet, l'accélération et la vitesse du véhicule. Il comprend également un observateur d'état, qui permet, à partir d'un modèle de contrôle de la trajectoire du véhicule, d'estimer des variables d'état du véhicule qui ne sont pas mesurables, de façon à alimenter un module de contrôle de direction par rétroaction et par anticipation. En particulier, l'observateur est utilisé pour estimer les valeurs de vitesse latérale et d'angle de braquage du volant afin de calculer les informations nécessaires pour alimenter le module de contrôle de direction du véhicule. Le système est également composé d'une caméra pour la détection du marquage au sol des voies. Cette caméra est associée à un module de calcul pour fournir des informations de détection de voie comprenant des informations sur la courbure de la trajectoire.

Le module de contrôle de direction permet de commander des actionneurs du système de régulation électronique du comportement dynamique du véhicule, notamment un actionneur de direction du système de direction du véhicule et un actionneur de freinage, à partir des informations fournies par les capteurs embarqués du véhicule, des informations fournies par l'observateur et des informations de détection de voie, de façon à partager des tâches de conduite avec le conducteur du véhicule.

Les commandes sur les actionneurs de direction et de freinage sont calculées à partir des erreurs latérale et longitudinale, en estimant les variables qui ne peuvent pas être mesurées. Ce système procure donc une assistance à la conduite en temps réel pour le conducteur, mais ne permet pas de prédire ce que le véhicule peut ou ne peut pas faire à l'avenir. En effet, par définition, les actions du conducteur n'existent pas encore. Il s'agit en réalité d'une action directe qui se répète à chaque itération dans le temps, en comparant le comportement courant du véhicule par rapport à la valeur de courbure détectée de la trajectoire et en agissant, en fonction de cette comparaison, sur le système ESP associé aux roues arrière.

Or, en particulier dans le cas des véhicules à conduite entièrement automatisée, le système doit être à même de réagir face à des situations instables où les limites physiques du véhicule peuvent être atteintes. Un exemple typique est un virage serré où le véhicule peut entrer avec une vitesse nettement trop élevée compte tenu des limites physiques imposées par l'adhérence entre les pneumatiques et le sol dans le virage.

Le document DE102017205508 présente des inconvénients similaires.

Aussi, il existe un besoin, dans le contexte de la mise en oeuvre de capacités de conduite automatisée sur les véhicules, de pouvoir anticiper de futurs états du véhicule où les limites de stabilité du véhicule pourraient être dépassées, en permettant d'adopter à l'avance des stratégies de sécurité adaptées.

A cette fin, l'invention concerne un dispositif selon la revendication 1.

Ce dispositif If

de commande du mouvement d'un véhicule automobile sur une route comprend un module de gestion d'au moins un système d'assistance à la conduite, notamment de type ESP, un dispositif embarqué de détection de marquage au sol des voies de circulation, apte à fournir des premières informations relatives au tracé routier en fonction du marquage détecté, un ensemble de capteurs de mesure embarqués aptes à fournir des deuxièmes informations relatives au comportement dynamique du véhicule, un dispositif de commande du mouvement longitudinal du véhicule et un dispositif de commande du mouvement latéral du véhicule, aptes à générer à partir des premières et deuxièmes informations des ordres de commande du mouvement longitudinal et du mouvement latéral à destination d'actionneurs de contrôle longitudinal et latéral du système de direction du véhicule, caractérisé en ce qu'il comprend un modèle de prédiction du comportement dynamique du véhicule alimenté par les premières et deuxièmes informations, apte à déterminer un ensemble d'états futurs du véhicule correspondant à des positions futures du véhicule sur une pluralité d'itérations définissant une portion de route à venir, ledit modèle de prédiction étant connecté à un module de détermination de la violation de valeurs limites de roulage du véhicule, apte à déterminer, pour chaque état futur déterminé, si l'une au moins de variables d'état définissant ledit état futur du véhicule atteint ou dépasse une valeur limite de roulage du véhicule, et à déduire une situation de risque à venir du véhicule pour au moins un état futur du véhicule.

Ainsi, grâce à cet agencement, le modèle de véhicule est apte à prédire les positions futures du véhicule en mode autonome sur l'ensemble du trajet situé devant lui, pour pouvoir identifier des positions futures correspondant à des situations de violation de valeurs limites de roulage du véhicule et prendre des décisions à l'avance pour prévenir ces situations.

Avantageusement, le modèle de prédiction du comportement dynamique du véhicule reçoit en entrée des ordres de commande prédits aux actionneurs du véhicule délivrés par un régulateur équivalent aux dispositifs de commande du mouvement longitudinal et du mouvement latéral du véhicule, des variables d'état de l'état futur du véhicule déterminé lors d'une itération en cours, ainsi que ses états courants, qui sont la position latérale du véhicule, la vitesse latérale du véhicule, l'angle de lacet et la vitesse angulaire en lacet du véhicule

Selon l'invention, le module de détermination de la violation des limites de roulage du véhicule inclut parmi les paramètres définissant une valeur limite de roulage du véhicule, des paramètres physiques relatifs auxdits actionneurs et/ou à la dynamique du véhicule.

Lesdits paramètres comprennent au moins une valeur maximale d'angle de braquage, une valeur maximale de vitesse d'angle du volant, une valeur représentative d'une capacité de freinage maximale et une valeur représentative d'une capacité d'accélération maximale du véhicule.

Avantageusement, ledit module de détermination de la violation des limites de roulage du véhicule est adapté pour comparer les états futurs déterminés du véhicule par rapport aux valeurs de limite de roulage du véhicule et pour générer un signal d'alerte dès qu'une au moins des variables d'état définissant ces états futurs atteint la valeur de limite de roulage correspondante.

Avantageusement, le module de gestion du système d'assistance à la conduite est adapté pour recevoir ledit signal d'alerte généré et, en cas de réception dudit signal d'alerte, pour commander une action correctrice anticipative de ladite variable d'état.

Avantageusement, ladite action correctrice anticipative comprend une action de freinage et/ou de direction.

L'invention concerne également un véhicule automobile comprenant un dispositif tel que décrit ci-dessus.

D'autres caractéristiques et avantages de la présente invention apparaîtront plus clairement à la lecture de la description suivante donnée à titre d'exemple illustratif et non limitatif et faite en référence aux dessins annexés :

[Fig.1] est un schéma illustrant une architecture du dispositif de commande de l'invention ;
[Fig.2] est un graphique illustrant un exemple de trajectoire du véhicule sur laquelle est évalué le dispositif de command de l'invention ;
[Fig.3A] est un graphique de la partie de trajectoire formée par la courbe prononcée illustrée à la figure 2, illustrant l'évolution des états réels et prédits du véhicule sur cette partie de trajectoire ;
[Fig.3B] est une vue de détail de l'entrée dans la courbe de la figure 3 ;
[Fig. 4] est un graphique illustrant les variations au cours du temps de l'erreur latérale des états réels et prédits du véhicule par rapport à la trajectoire à suivre, pendant toute la durée du parcours de la figure 2 ;
[Fig. 5] est un graphique illustrant les variations au cours du temps de l'angle de braquage réel du volant et de l'angle prédit, par rapport à une valeur maximale de l'angle de braquage du volant.
[Fig. 6] est un graphique illustrant la sortie correspondante du module de détermination de la violation de valeurs limites de roulage du véhicule.

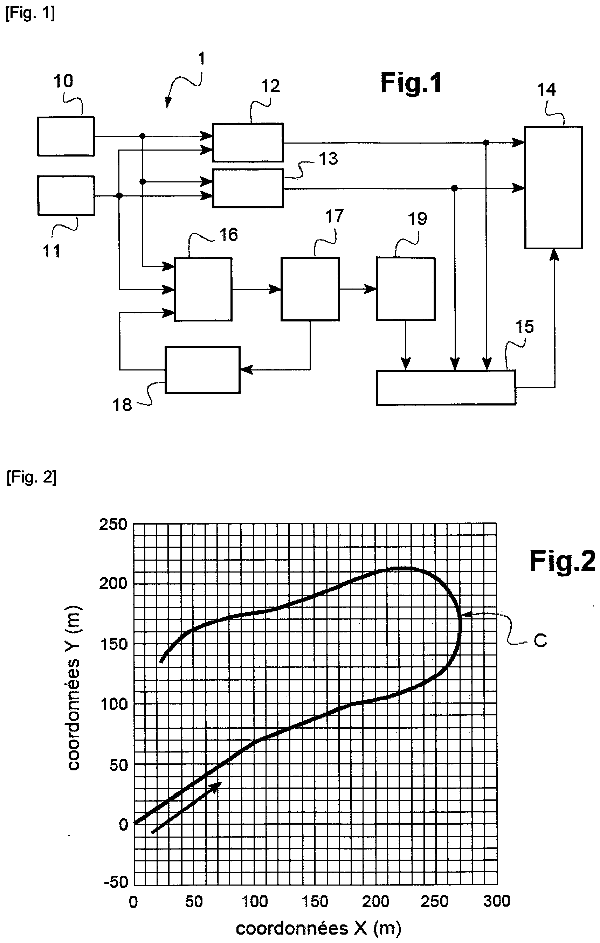

En référence à la figure 1, le dispositif de commande 1 du mouvement du véhicule comporte un dispositif 10 embarqué de détection de marquage au sol des voies de circulation. Il s'agit typiquement d'une caméra embarqué orienté vers l'avant du véhicule automobile, par exemple installée en haut du pare-brise, au niveau de la jonction avec le toit du véhicule, ou encore installée derrière le rétroviseur intérieur du véhicule, de façon à permettre d'acquérir des images de la scène située devant le véhicule et à pouvoir détecter le marquage routier à l'avant du véhicule automobile. Pour ce faire, la caméra est associée à une unité de traitement, qui récupère le flux d'images fourni par la caméra et l'analyse par des techniques de traitement d'image, pour détecter notamment les lignes de marquage routier au sol situées le long de la voie de circulation empruntée par le véhicule. L'unité de traitement est également adaptée pour fournir des informations relatives au tracé routier en fonction du marquage détecté, en particulier le nombre de voies, la largeur des accotements, la déviation latérale vers la voie centrale, un profil de courbure de la trajectoire.

Le véhicule est également équipé d'un ensemble de capteurs embarqués 11, disposés au niveau de différents équipements du véhicule (volant, direction, freins, etc.) qui sont en mesure de fournir des informations relatives au comportement dynamique du véhicule, en particulier des informations telles que la vitesse, l'angle de cap, l'accélération, la vitesse angulaire en lacet du véhicule, etc.

Les informations relatives au tracé routier et les informations relatives au comportement dynamique du véhicule sont fournie à un dispositif de commande 12 du mouvement longitudinal du véhicule, ou contrôleur longitudinal, et à un dispositif de commande 13 du mouvement latéral d'un véhicule, ou contrôleur latéral, qui sont aptes à générer à partir de ces informations, à chaque point d'itération, des ordres de commande de mouvement longitudinal et de mouvement latéral à destination d'actionneurs 14 en particulier au moins un actionneur de contrôle longitudinal du véhicule et au moins un actionneur de direction du système de direction du véhicule, de façon à permettre de diriger le véhicule en mode autonome, c'est-à-dire sans actions du conducteur, par exemple en appliquant une stratégie de contrôle de suivie de la voie centrale. Ainsi, pour le placement longitudinal du véhicule, le dispositif de commande 12 du mouvement longitudinal du véhicule est utilisé pour contrôler des actionneurs de freinage et de d'accélération du véhicule. Pour le placement latéral du véhicule, le dispositif de commande 13 du mouvement latéral du véhicule est utilisé pour contrôler des actionneurs de contrôle de l'angle de braquage des roues.

Ces deux dispositifs de commande 12 et 13 mettent en oeuvre des régulateurs qui utilisent les variables d'entrée/sortie suivantes : vitesse courante du véhicule, accélération courante du véhicule, vitesse souhaitée du véhicule au point d'itération donné, accélération souhaitée du véhicule au point d'itération donné, vitesse angulaire en lacet courante, vitesse angulaire en lacet souhaitée au point d'itération donné, erreur de cap courante du véhicule, erreur latérale courante du véhicule.

Les sorties des dispositifs de commande 12 et 13 sont ensuite reprises dans un module 15 de gestion des systèmes d'assistance à la conduite du véhicule, notamment un système de type ESP, dont est équipé le véhicule. Ces systèmes sont donc asservis aux seules informations qui proviennent des capteurs, ce qui n'assure une assistance que du type réactif. Il n'existe actuellement aucun système capable d'indiquer les limites de roulage du véhicule de la portion de route à venir. Autrement dit, ces systèmes sont aveugles et sont incapables d'anticiper des états futurs du véhicule susceptibles de provoquer des situations de violation des limites de roulage du véhicule, telle que manoeuvres de freinage d'urgence ou survitesse dans les virages.

Aussi, on prévoit d'alimenter un modèle de prédiction 16 du comportement dynamique du véhicule avec d'une part, les informations relatives au comportement dynamique du véhicule et, d'autre part, les informations relatives au tracé routier, de sorte que le modèle 16 bénéficie de ces informations pour prédire des états futurs du véhicule.

Ce modèle 16 de prédiction est donc sensible aux signaux d'état du véhicule comprenant la vitesse latérale du véhicule, la vitesse longitudinale du véhicule, la vitesse angulaire en lacet du véhicule et l'angle de braquage, ainsi qu'aux informations relatives au tracé routier et plus particulièrement la courbure de la trajectoire, pour permettre de prédire en sortie du modèle un ensemble de positions du véhicule correspondant aux états futurs du véhicule, jusqu'à l'horizon électronique. L'horizon électronique est formé d'un ensemble d'informations relatives à l'environnement routier dans lequel le véhicule est susceptible d'évoluer dans un futur proche, c'est-à-dire en pratique jusqu'à la visibilité maximale permise par le dispositif de détection embarqué.

Chacune de ces positions futures est associée à une commande de direction, d'accélérateur et de freinage du véhicule, ce qui permet d'évaluer si l'une de ces positions futures est en dehors des limites de roulage du véhicule.

Le modèle de prédiction du véhicule est déterminé comme suit :

$$\dot{X}_v = A_v X_v + B_v u_v$$

$$Y_v = C_v X_v$$

Où $u_v$ est la commande d'angle du volant de direction et $X_v$ le vecteur d'état, défini comme suit :

$$X_v = \begin{bmatrix} y_v & v_y & \psi_v & \omega_v \end{bmatrix}$$

où $y_v$ est la position latérale du véhicule, $v_y$ la vitesse latérale du véhicule, $\Psi_v$ l'angle de lacet et $\omega_v$ la vitesse angulaire en lacet du véhicule.

Les matrices A, B et C sont décrites ci-après :

$$A_v = \begin{bmatrix} 0 & 1 & 0 & 0 \\ 0 & \dfrac{-(C_f+C_r)}{mv_x} & 0 & \dfrac{-aC_f+bC_r}{mv_x}-v_x \\ 0 & 0 & 0 & 1 \\ 0 & \dfrac{-aC_f+bC_r}{I_z v_x} & 0 & \dfrac{-a^2C_f-b^2C_r}{I_z v_x} \end{bmatrix}$$

$$B_v = \begin{bmatrix} 0 & \dfrac{C_f}{m} & 0 & \dfrac{aC_f}{I_z} \end{bmatrix}^T$$

$$C_v = \begin{bmatrix} 0 & 0 & 0 & 1 \end{bmatrix}$$

où $C_f$ et $C_r$ correspondent à la raideur en virage respectivement au niveau des roues avant et arrière, $v_x$ est la vitesse du véhicule, m est la masse du véhicule, Iz est le moment d'inertie autour de l'axe vertical Z, et a et b sont les distances du centre de gravité du véhicule par rapport aux roues avant et arrière respectivement.

Ce modèle dynamique propre au véhicule peut être connecté à un modèle descriptif du comportement des pneumatiques élaboré sur la base du modèle proposé par PACEJKA ou autre, pour inclure les limites de stabilité.

La sortie du modèle 16 est connectée à un module 17 de détermination des états futurs du véhicule dans lequel sont calculées les positions futures du véhicule. Plus précisément, ce module 17 utilise la vitesse courante du véhicule, la position et l'orientation du véhicule, l'empattement et l'angle du volant de direction pour calculer la première itération. Ensuite, pour les états futurs, il fait évoluer le modèle de prédiction 16, en tenant compte de la réponse en boucle fermée d'un régulateur 18 de prédiction du véhicule, qui fournit la même réponse que les régulateurs mis en oeuvre dans les dispositifs de commande 12 et 13 du mouvement longitudinal et latéral du véhicule. Ainsi, les positions futures du véhicule sont estimées à l'aide de la même stratégie de contrôle que celle qui sera appliquée ultérieurement par les dispositifs de commande du mouvement longitudinal et latéral du véhicule auxdites positions.

Ainsi, les valeurs d'entrée sont les ordres de commande prédits fournis par le régulateur 18, recueillis au début de l'itération en cours, et les valeurs d'état sont les composantes du vecteur d'état mis à jour $X_v$ caractérisant l'état du système à l'itération précédente.

La sortie du module 17 de détermination des états futurs du véhicule est donc fournie en premier lieu au régulateur 18 de prédiction du véhicule, qui comme indiqué précédemment, est équivalent aux dispositifs de commande 12 et 13 du mouvement longitudinal et latéral du véhicule. La principale différence est que la sortie du régulateur de prédiction est également utilisée pour alimenter le modèle de prédiction 16, de façon à permettre de couvrir avec la prédiction les états futurs du véhicule sur l'ensemble de l'horizon électronique.

La sortie du module 17 de détermination des états futurs du véhicule est également fournie à un module 19 de détermination de la violation de valeurs limites de roulage du véhicule. Ce module 19 inclut toutes les limites physiques provenant soit des actionneurs du véhicule, soit de la dynamique du véhicule lui-même. Il prend en compte l'angle maximal du volant de direction, la vitesse maximale d'angle du volant, la capacité de freinage maximale et la capacité d'accélération maximale. Il surveille tous les états futurs du véhicule par rapport à ces valeurs maximales et est adapté pour lever un drapeau indicateur lorsqu'un de ces états futurs dépasse les limites du véhicule.

Le module 19 de détermination de la violation des limites de roulage du véhicule est connecté au module 15 de gestion des systèmes d'assistance à la conduite du véhicule. Ce dernier reçoit donc les sorties courantes des dispositifs de commande 12 et 13 et les sorties du régulateur de prédiction avec les indicateurs de violation. Il permet de modifier le comportement dynamique du véhicule en réagissant à l'avance en fonction des états futurs pour lesquels un indicateur de violation des limites de roulage du véhicule a été levé.

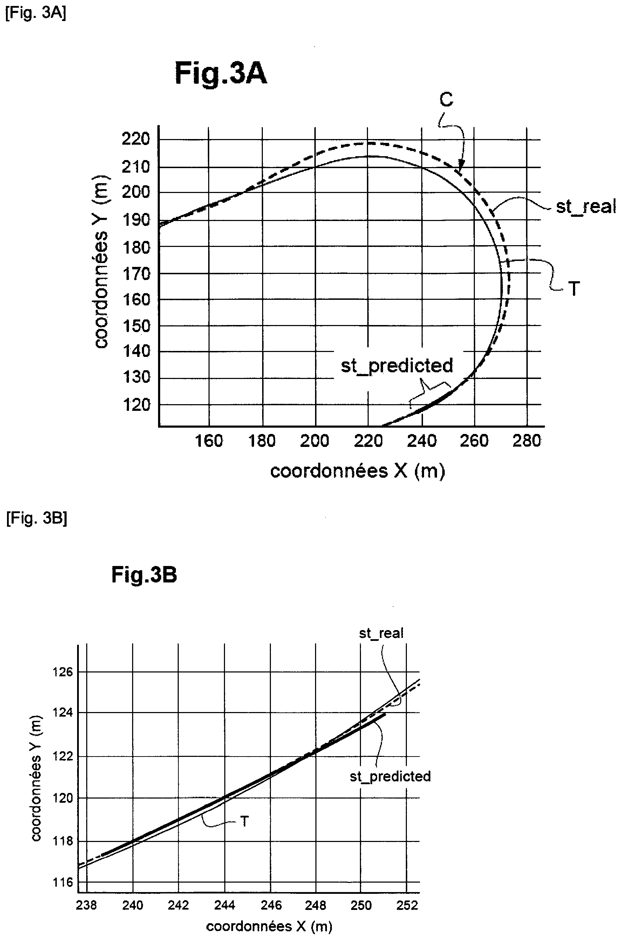

L'exemple suivant illustre les principes qui viennent d'être décrit. La figure 2 illustre en coordonnées X et Y, un exemple de trajectoire spécifique dans lequel une courbe prononcée C est réalisée. L'ensemble de la trajectoire est réalisée par un véhicule équipé d'un dispositif de commande 1 du mouvement du véhicule comme décrit précédemment en référence à la figure 1. Les figures 3A et 3B montrent plus précisément le moment exact où le modèle de prédiction du véhicule détecte des signaux de commande des actionneurs ou des états futurs du véhicule qui sont hors d'une plage contrôlable, c'est-à-dire qui atteignent ou dépassent une valeur limite de roulage du véhicule. La figure 3A représente la partie de trajectoire au niveau de la courbe prononcée C de la figure 2, tandis que la figure 3B est une vue de détail de l'entrée dans la courbe prononcée C. Sur la figure 3A sont représentés la trajectoire T à suivre par le véhicule, les états réels du véhicule st_real tels que déterminés par les capteurs embarqués, et les états futurs ou prédits du véhicule st_predicted fournis par le modèle de prédiction 16. Le véhicule suivra donc la trajectoire définie par l'ensemble des états réels du véhicule st_real, mais le modèle de prédiction est capable de détecter en avance, par exemple 800 ms avant, les états futurs du véhicule qui sont hors de la plage contrôlable, qui sont représentés par l'extrémité de la ligne st_predicted.

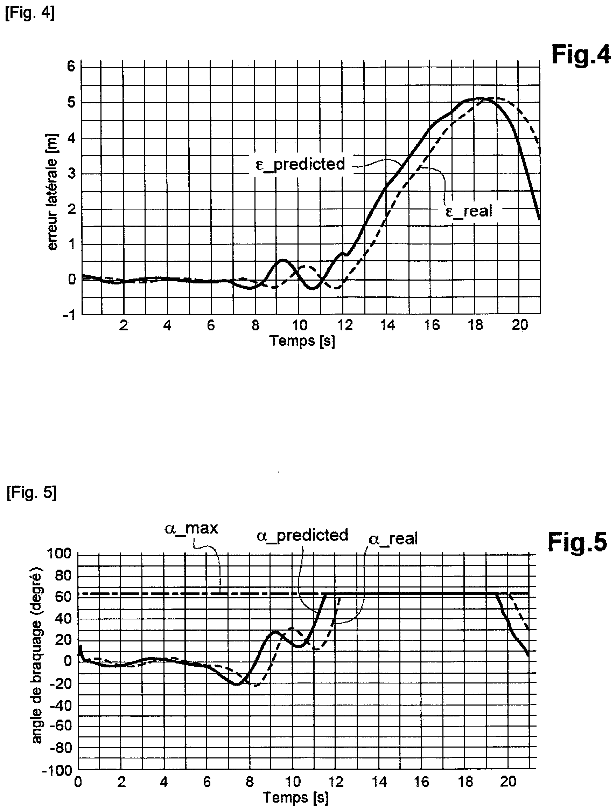

La figure 4 représente l'erreur latérale en mètres du véhicule par rapport à la trajectoire à suivre, pendant toute la durée du parcours de la figure 2. La courbe

$\varepsilon$\_real représente l'erreur latérale des états réels du véhicule par rapport à la trajectoire à suivre et la courbe $\varepsilon$\_predicted représente l'erreur latérale des états prédits du véhicule 800 ms avant par rapport à la trajectoire à suivre. Autour de la douzième seconde, des erreurs latérales de plus de 1 mètre apparaissent, signifiant que le véhicule sort de la plage contrôlable.

La figure 5 présente le comportement de l'angle de braquage du volant $\alpha$\_real résultant de l'état réel du véhicule et de l'angle prédit $\alpha$\_predicted, en fonction du temps, ainsi que la valeur maximale $\alpha$\_max de l'angle de braquage du volant fournie par le système de direction assistée électrique, fixée à environ 65°. Suivant cet exemple, grâce à la prédiction, le véhicule peut détecter les états d'angle de braquage du volant qui atteignent la valeur maximale contrôlable avant qu'ils ne se produisent et prendre des décisions en conséquence. La figure 5 illustre l'avance temporelle des états prédits du véhicule qui, plus tard, correspondront aux états réels du véhicule. Ainsi, le modèle de prédiction permet de déterminer à l'avance les états futurs du véhicule correspondant à des situations potentiellement dangereuses où l'angle de braquage atteint la valeur maximale.

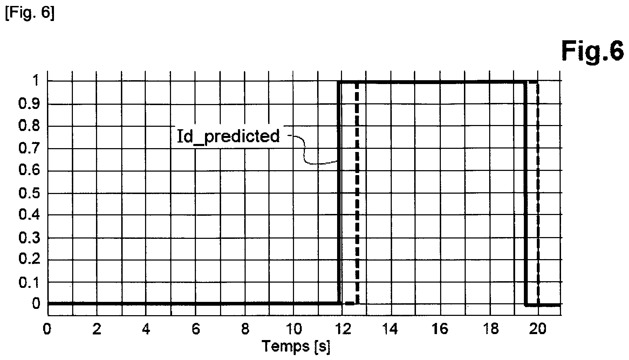

La figure 6 illustre la sortie correspondante du module de détermination de la violation des limites de roulage du véhicule. Ainsi, la levée de l'indicateur de violation Id\_predicted montre le moment où le module de détermination de la violation des limites de roulage du véhicule détecte que l'état futur du véhicule en ce qui concerne l'angle de braquage du volant viole la valeur limite maximale autorisée. Une telle alerte peut être émise pour une ou plusieurs variables d'état du véhicule prédites hors de sa plage contrôlable. Dans l'exemple présenté ici, la levée de l'indicateur Id\_predicted permet d'informer le module de gestion 15 des systèmes d'assistance à la conduite s'agissant de l'évolution future de l'angle de braquage, environ 0,8 seconde avant que l'état réel ne se produise. Le module de gestion 15 des systèmes d'assistance à la conduite du véhicule est alors à même d'agir et de prévenir cette situation à l'avance, en commandant une action correctrice anticipative visant à empêcher que l'angle de braquage ne viole la valeur limite maximale autorisée. Une telle action correctrice anticipative peut par exemple consister en une action légère de freinage et/ou de direction. Ainsi, l'invention permet d'augmenter la sécurité du véhicule en anticipant les états futurs du véhicule où ses limites de stabilité pourraient être dépassées, en adoptant à l'avance des stratégies de sécurité appropriées.

## Revendications

**1.** Dispositif de commande (1) du mouvement d'un véhicule automobile sur une route, comprenant un module de gestion (15) d'au moins un système d'assistance à la conduite, notamment de type ESP, un dispositif embarqué (10) de détection de marquage au sol des voies de circulation, apte à fournir des premières informations relatives au tracé routier en fonction du marquage détecté, un ensemble de capteurs de mesure embarqués (11) aptes à fournir des deuxièmes informations relatives au comportement dynamique du véhicule, un dispositif de commande (12) du mouvement longitudinal du véhicule et un dispositif de commande (13) du mouvement latéral du véhicule, aptes à générer à partir des premières et deuxièmes informations des ordres de commande du mouvement longitudinal et du mouvement latéral à destination d'actionneurs (14) de contrôle longitudinal et latéral du système de direction du véhicule, comprenant un modèle de prédiction (16) du comportement dynamique du véhicule alimenté par les premières et deuxièmes informations, apte à déterminer un ensemble d'états futurs du véhicule correspondant à des positions futures du véhicule sur une pluralité d'itérations définissant une portion de route à venir, ledit modèle de prédiction étant connecté à un module (19) de détermination de la violation de valeurs limites de roulage du véhicule, apte à déterminer, pour chaque état futur déterminé, si l'une au moins de variables d'état définissant ledit état futur du véhicule atteint ou dépasse une des valeurs limites de roulage du véhicule, et à déduire une situation de risque à venir du véhicule pour au moins un des états futurs du véhicule, **caractérisé en ce que** le module (19) de détermination de la violation des valeurs limites de roulage du véhicule inclut parmi paramètres définissant une des valeurs limites de roulage du véhicule, des paramètres physiques relatifs auxdits actionneurs et/ou à la dynamique du véhicule, lesdits paramètres comprenant au moins une valeur maximale d'angle de braquage ($\alpha$\_max), une valeur maximale de vitesse d'angle du volant, une valeur représentative d'une capacité de freinage maximale et une valeur représentative d'une capacité d'accélération maximale du véhicule.

**2.** Dispositif selon la revendication 1, **caractérisé en ce que** le modèle de prédiction (16) du comportement dynamique du véhicule reçoit en entrée des ordres de commande prédits aux actionneurs du véhicule délivrés par un régulateur (18) équivalent aux dispositifs de commande (12, 13) du mouvement longitudinal et du mouvement latéral du véhicule, des variables d'état de l'état futur du véhicule déterminé lors d'une itération en cours, ainsi que ses états courants, qui sont la position latérale du véhicule, la vitesse latérale du véhicule, l'angle de lacet et la vitesse angulaire en lacet du véhicule.

**3.** Dispositif selon la revendication 1 ou 2, **caractérisé en ce que** ledit module de détermination de la violation des limites de roulage du véhicule est adapté pour comparer les états futurs déterminés du véhicule par rapport aux valeurs de limite de roulage du véhicule et pour générer un signal d'alerte (ld_predicted) dès qu'une au moins des variables d'état ($\alpha$_predicted) définissant ces états futurs atteint la valeur de limite de roulage correspondante (a_max).

4. Dispositif selon la revendication 3, **caractérisé en ce que** le module (15) de gestion du système d'assistance à la conduite est adapté pour recevoir ledit signal d'alerte généré et, en cas de réception dudit signal d'alerte, pour commander une action correctrice anticipative de ladite variable d'état.

5. Dispositif selon la revendication 4, **caractérisé en ce que** ladite action correctrice anticipative comprend une action de freinage et/ou de direction.

6. Véhicule automobile **caractérisé en ce qu'**il comprend un dispositif de commande selon l'une quelconque des revendications précédentes.


**Patentansprüche**

1. Steuervorrichtung (1) zur Steuerung der Bewegung eines Kraftfahrzeugs auf eine Straße, umfassend ein Verwaltungsmodul (15) mindestens eines Fahrassistenzsystems, insbesondere vom Typ ESP, eine bordeigene Vorrichtung (10) zur Erkennung einer Bodenmarkierung der Fahrspuren, die geeignet ist, erste Informationen bezüglich des Straßenverlaufs in Abhängigkeit von der erkannten Markierung auszugeben, eine Menge von bordeigenen Messfühlern (11), die geeignet sind, zweite Informationen bezüglich des dynamischen Verhaltens des Fahrzeugs auszugeben, eine Steuervorrichtung (12) zur Steuerung der Längsbewegung des Fahrzeugs und eine Steuervorrichtung (13) zur Steuerung der seitlichen Bewegung des Fahrzeugs, die geeignet sind, ausgehend von den ersten und zweiten Informationen Befehle zur Steuerung der Längs- und der seitlichen Bewegung zu erzeugen, die an Aktoren (14) zur Längs- und seitlichen Kontrolle des Lenksystems des Fahrzeugs gerichtet sind, umfassend ein Prädiktionsmodell (16) zur Prädiktion des dynamischen Verhaltens des Fahrzeugs, dem die ersten und zweiten Informationen zugeführt werden und das geeignet ist, eine Menge von zukünftigen Zuständen des Fahrzeugs, die zukünftigen Positionen des Fahrzeugs entsprechen, über eine Vielzahl von Iterationen zu ermitteln, die einen bevorstehenden Straßenabschnitt definieren, wobei das Prädiktionsmodell mit einem Modul (19) zur Ermittlung der Verletzung von Fahrgrenzwerten des Fahrzeugs verbunden ist, das geeignet ist, für jeden ermittelten zukünftigen Zustand zu ermitteln, ob mindestens eine von Zustandsvariablen, die den zukünftigen Zustand des Fahrzeugs definieren, einen der Fahrgrenzwerte des Fahrzeugs erreicht oder überschreitet, und eine bevorstehende Gefahrensituation des Fahrzeugs für mindestens einen der zukünftigen Zustände des Fahrzeugs abzuleiten, **dadurch gekennzeichnet, dass** das Modul (19) zur Ermittlung der Verletzung der Fahrgrenzwerte des Fahrzeugs unter Parametern, die einen der Fahrgrenzwerte des Fahrzeugs definieren, physikalische Parameter bezüglich der Aktoren und/oder der Dynamik des Fahrzeugs beinhaltet, wobei die Parameter mindestens einen maximalen Einschlagwinkelwert ($\alpha$_max), einen maximalen Winkelgeschwindigkeitswert des Lenkrads, einen für ein maximales Bremsvermögen stehenden Wert und einen für ein maximales Beschleunigungsvermögen des Fahrzeugs stehenden Wert umfassen.

2. Vorrichtung nach Anspruch 1, **dadurch gekennzeichnet, dass** das Prädiktionsmodell (16) zur Prädiktion des dynamischen Verhaltens des Fahrzeugs im Eingang den Aktoren des Fahrzeugs prädizierte Steuerbefehle, die von einem Regler (18) ausgegeben werden, der gleichwertig zu den Steuervorrichtungen (12, 13) zur Steuerung der Längsbewegung und der seitlichen Bewegung des Fahrzeugs ist, Zustandsvariablen des zukünftigen Zustands des Fahrzeugs, der bei einer aktuellen Iteration ermittelt wird, sowie seine aktuellen Zustände, die die seitliche Position des Fahrzeugs, die seitliche Geschwindigkeit des Fahrzeugs, der Gierwinkel und die Gierwinkelgeschwindigkeit des Fahrzeugs sind, empfängt.

3. Vorrichtung nach Anspruch 1 oder 2, **dadurch gekennzeichnet, dass** das Modul zur Ermittlung der Verletzung der Fahrgrenzwerte des Fahrzeugs geeignet ist, die ermittelten zukünftigen Zustände des Fahrzeugs mit den Fahrgrenzwerten des Fahrzeugs zu vergleichen und ein Warnsignal (ld_predicted) zu erzeugen, sobald mindestens eine der Zustandsvariablen ($\alpha$_predicted), die diese zukünftigen Zustände definieren, den entsprechenden Fahrgrenzwert ($\alpha$_max) erreicht.

4. Vorrichtung nach Anspruch 3, **dadurch gekennzeichnet, dass** das Verwaltungsmodul (15) des Fahrassistenzsystems geeignet ist, das erzeugte Warnsignal zu empfangen und, im Fall des Empfangens des Warnsignals, eine der Zustandsvariable vorgreifende Korrekturmaßnahme zu steuern.

5. Vorrichtung nach Anspruch 4, **dadurch gekennzeichnet, dass** die vorgreifende Korrekturmaßnahme eine Brems- und/oder Lenkmaßnahme umfasst.

6. Kraftfahrzeug, **dadurch gekennzeichnet, dass** es eine Steuervorrichtung nach einem der vorhergehenden Ansprüche umfasst.

**Claims**

1. Device (1) for controlling the movement of a motor vehicle on a road, comprising a management module (15) for managing at least one driving assistance system, in particular of ESP type, an onboard device (10) for detecting the ground markings for traffic lanes and capable of providing first information relating to the road layout according to the detected markings, a set of onboard measurement sensors (11) capable of providing second information relating to the dynamic behaviour of the vehicle, a control device (12) for controlling the longitudinal movement of the vehicle and a control device (13) for controlling the lateral movement of the vehicle, which control devices are capable of generating, from the first and second information, control commands for the longitudinal movement and for the lateral movement, the commands being sent to actuators (14) for longitudinal and lateral control of the steering system of the vehicle, comprising a prediction model (16) for predicting the dynamic behaviour of the vehicle, supplied with the first and second information, and capable of determining a set of future states of the vehicle corresponding to future positions of the vehicle over a plurality of iterations defining an upcoming road portion, said prediction model being connected to a determination module (19) for determining the violation of vehicle driving limit values, which is capable of determining, for each determined future state, whether at least one of the state variables defining said future state of the vehicle reaches or exceeds one of the vehicle driving limit values, and of inferring therefrom an upcoming risk situation for the vehicle for at least one of the future states of the vehicle, **characterized in that** the determination module (19) for determining the violation of the vehicle driving limit values includes, among the parameters defining one of the vehicle driving limit values, physical parameters relating to said actuators and/or to the dynamics of the vehicle, said parameters comprising at least a maximum steering angle value ($\alpha$\_max), a maximum steering wheel angle speed value, a value representative of a maximum braking capability and a value representative of a maximum acceleration capability of the vehicle.

2. Device according to Claim 1, **characterized in that** the prediction model (16) for predicting the dynamic behaviour of the vehicle receives as input predicted control commands for the actuators of the vehicle delivered by a regulator (18) equivalent to the control devices (12, 13) for controlling the longitudinal movement and the lateral movement of the vehicle, state variables of the future state of the vehicle determined during a current iteration, and its current states, which are the lateral position of the vehicle, the lateral speed of the vehicle, the yaw angle and the yaw rate of the vehicle.

3. Device according to Claim 1 or 2, **characterized in that** said determination module for determining the violation of the vehicle driving limits is designed to compare the determined future states of the vehicle with respect to the vehicle driving limit values and to generate an alert signal (Id_predicted) as soon as at least one of the state variables ($\alpha$\_predicted) defining these future states reaches the corresponding driving limit value ($\alpha$\_max).

4. Device according to Claim 3, **characterized in that** the management module (15) for managing the driving assistance system is designed to receive said generated alert signal and, upon receiving said alert signal, to control an anticipatory corrective action for said state variable.

5. Device according to Claim 4, **characterized in that** said anticipatory corrective action comprises a braking and/or steering action.

6. Motor vehicle, **characterized in that** it comprises a control device according to any one of the preceding claims.

[Fig. 1]

**Fig.1**

[Fig. 2]

**Fig.2**

[Fig. 3A]

# Fig.3A

[Fig. 3B]

# Fig.3B

[Fig. 4]

**Fig.4**

[Fig. 5]

**Fig.5**

[Fig. 6]

**Fig.6**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- KR 100851120

- DE 102017205508